# EUROPEAN PATENT APPLICATION

(11) **EP 3 771 647 A1**
(43) Date of publication of application: **03.02.2021**
(21) Application number: 19210923.9
(22) Date of filing: 22.11.2019
(51) Int. Cl.: B64D 37/32, A62C 3/07

(54) **INERT GAS SYSTEM AND METHOD**

(30) Priority: 01.08.2019 US 201916529308
(71) Applicant: Hamilton Sundstrand Corporation, Charlotte, NC 28217-4578 (US)
(72) Inventor: PERRY, Michael L., Glastonbury, CT 06033 (US)
(74) Representative: Dehns

(57) **Abstract**

A system and method for providing inert gas to a protected space (7) is disclosed. The system is onboard an aircraft that includes a pressurized cabin or cockpit space. The system includes an airflow path including an inlet and an outlet, and the inlet is in operative fluid communication with the pressurized cabin or cockpit space. A carbon dioxide separator (3) is configured for separating carbon dioxide from air, and includes an inlet in operative fluid communication with the airflow path outlet, and a carbon dioxide outlet. The system also includes an inert gas flow path from the carbon dioxide outlet to the protected space.

## Description

### BACKGROUND

The subject matter disclosed herein generally relates to systems for generating and providing inert gas, oxygen, and/or power such as may be used on vehicles (e.g., aircraft, military vehicles, heavy machinery vehicles, sea craft, ships, submarines, etc.) or stationary applications such as fuel storage facilities.

It is recognized that fuel vapors within fuel tanks can become combustible or explosive in the presence of oxygen. An inerting system decreases the probability of combustion or explosion of flammable materials in a fuel tank by maintaining a chemically non-reactive or inerting gas, such as nitrogen-enriched air, in the fuel tank vapor space, also known as ullage. Three elements are required to initiate combustion or an explosion: an ignition source (e.g., heat), fuel, and oxygen. The oxidation of fuel may be prevented by reducing any one of these three elements. If the presence of an ignition source cannot be prevented within a fuel tank, then the tank may be made inert by: 1) reducing the oxygen concentration, 2) reducing the fuel concentration of the ullage to below the lower explosive limit (LEL), or 3) increasing the fuel concentration to above the upper explosive limit (UEL). Many systems reduce the risk of oxidation of fuel by reducing the oxygen concentration by introducing an inerting gas such as nitrogen-enriched air (NEA) (i.e., oxygen-depleted air or ODA) to the ullage.

### BRIEF DESCRIPTION

A system for providing inert gas to a protected space is disclosed. The system is onboard an aircraft that includes a pressurized cabin or cockpit space. The system includes an airflow path including an inlet and an outlet, and the inlet is in operative fluid communication with the pressurized cabin or cockpit space. A carbon dioxide separator is configured for separating carbon dioxide from air, and includes an inlet in operative fluid communication with the airflow path outlet, and a carbon dioxide outlet. The system also includes an inert gas flow path from the carbon dioxide outlet to the protected space.

In some aspects, the carbon dioxide separator can include a sorbent for carbon dioxide arranged to remove carbon dioxide from the airflow path and to transfer carbon dioxide to the inert gas flow path.

Also disclosed is a method inerting an aircraft protected space. According to the method, carbon dioxide in air from a pressurized cabin or cockpit space is removed, and the removed carbon dioxide is directed to the protected space.

In some aspects, the method further includes generating inert gas in addition to the removed carbon dioxide, and directing the inert gas and the carbon dioxide to the protected space.

In any one or combination of the foregoing aspects, the method further includes contacting the air from the pressurized cabin or cockpit space with a carbon dioxide sorbent to form a loaded sorbent. Carbon dioxide is removed from the loaded sorbent to form de-loaded sorbent, and the removed carbon dioxide is directed to the protected space.

In any one or combination of the foregoing aspects, the method further includes contacting the de-loaded sorbent with the air from the pressurized cabin or cockpit space to form loaded sorbent, and repeating said removing and contacting to recycle the sorbent.

In any one or combination of the foregoing aspects, the method further includes electrochemically transforming an electrochemically active agent in the loaded sorbent from a first compound having a first sorption capacity for carbon dioxide to second compound having a second sorption capacity for carbon dioxide that is less than the first sorption capacity, thereby releasing carbon dioxide.

In some of any of the above aspects including a sorbent, the sorbent can remove carbon dioxide from the airflow path by absorption.

In some of any of the above aspects including a sorbent, the sorbent can remove carbon dioxide from the airflow path by adsorption.

In some of any of the above aspects including a sorbent, the carbon dioxide separator includes a first fluid contactor in operative fluid communication with the airflow path. A second fluid contactor is in operative fluid communication with the inert gas flow path. A fluid flow path is arranged to transport a fluid comprising the sorbent in a loop from the first fluid contactor to the second fluid contactor, and from the second fluid contactor to the first fluid contactor.

In some of any of the above aspects including a sorbent, the carbon dioxide separator includes a first fluid contactor including the sorbent therein. A gas flow path is arranged to alternately: (a) to transport air from the airflow path to the first fluid contactor in a carbon dioxide capture mode, and (b) to transport carbon dioxide from the rom the first fluid contactor to the inert gas flow path.

In some aspects including the above-mentioned alternatively arranged gas flow path, the gas flow path is further arranged to alternately: (a) transport carbon dioxide from the from the second fluid contactor to the inert gas flow path when the first fluid contactor is in the carbon dioxide capture mode, and (b) to transport air from the airflow path to the second fluid contactor when the first fluid contactor is not in the carbon dioxide capture mode.

In any one or combination of the above aspects including a sorbent, the sorbent can include an amine, an alkaline or alkaline earth, a quinone, a molecular sieve, or a metal organic framework sorbent.

In any one or combination of the above aspects, the carbon dioxide separator can include an electrochemical cell comprising an anode and a cathode separated by a separator comprising an ion transfer medium. An anode fluid flow path is in operative fluid communication with the anode between an anode fluid flow path inlet and an anode fluid flow path outlet, and a cathode fluid flow path in operative fluid communication with the cathode between a cathode flow path inlet and a cathode fluid flow path outlet. A sorption fluid flow path is disposed from the cathode fluid flow path outlet to the anode fluid flow path inlet. The sorption fluid flow path includes an absorber in operative fluid communication with the airflow path inlet. A desorption fluid flow path is disposed from the anode fluid flow path outlet to the cathode fluid flow path inlet, said desorption fluid flow path including a desorber in operative fluid communication with the carbon dioxide outlet. A working liquid is disposed in the sorption and desorption fluid flow loops comprising an electrochemically active agent that reversibly transforms from a first compound to a second compound at the anode, and from the second compound to the first compound at the cathode. The first compound has a greater sorption capacity for carbon dioxide relative to a carbon dioxide sorption capacity of the second compound.

In any aspects including the electrochemical cell, the electrochemically active agent can include a quinone selected from the benzoquinone, naphthoquinone, anthraquinone, or a combination comprising any of the foregoing.

In any one or combination of aspects including the electrochemical cell, the electrochemically active agent can include a sulfonic acid group.

In any one or combination of aspects including the electrochemical cell, the electrochemically active agent comprises benzoquinone disulfonic acid.

In any one or combination of the foregoing aspects, the system can further include an inert gas generator on the inert gas flow path.

Also disclosed is an aircraft including an aircraft body, a protected space including a fuel tank, an engine, a pressurized cabin or cockpit space, and the system according to any one or combination of the foregoing aspects.

### BRIEF DESCRIPTION OF THE DRAWINGS

The following descriptions should not be considered limiting in any way. With reference to the accompanying drawings, like elements are numbered alike:
FIG. 1A is a schematic illustration of an aircraft that can incorporate various aspects of the present disclosure;
FIG. 1B is a schematic illustration of a bay section of the aircraft of FIG. 1A;
FIG. 2 is a schematic illustration of an example embodiment of an inert gas generating system;
FIG. 3 is a schematic illustration of an example embodiment of a gas separator;
FIG. 4 is a schematic illustration of an example embodiment of another gas separator; and
FIG. 5 is a schematic illustration of an example embodiment of an electrochemical separator for generating inert gas.

### DETAILED DESCRIPTION

A detailed description of one or more aspects of the disclosed apparatus and method are presented herein by way of exemplification and not limitation with reference to the Figures.

Although shown and described above and below with respect to an aircraft, aspects of the present disclosure are applicable to on-board systems for any type of vehicle or for on-site installation in fixed systems. For example, military vehicles, heavy machinery vehicles, sea craft, ships, submarines, etc., may benefit from implementation of aspects of the present disclosure. For example, aircraft and other vehicles having fire suppression systems, emergency power systems, and other systems such as the electrochemical systems as described herein, and may include the redundant systems described herein. As such, the present disclosure is not limited to application to aircraft, but rather aircraft are illustrated and described as example and explanatory aspects for implementation of aspects of the present disclosure.

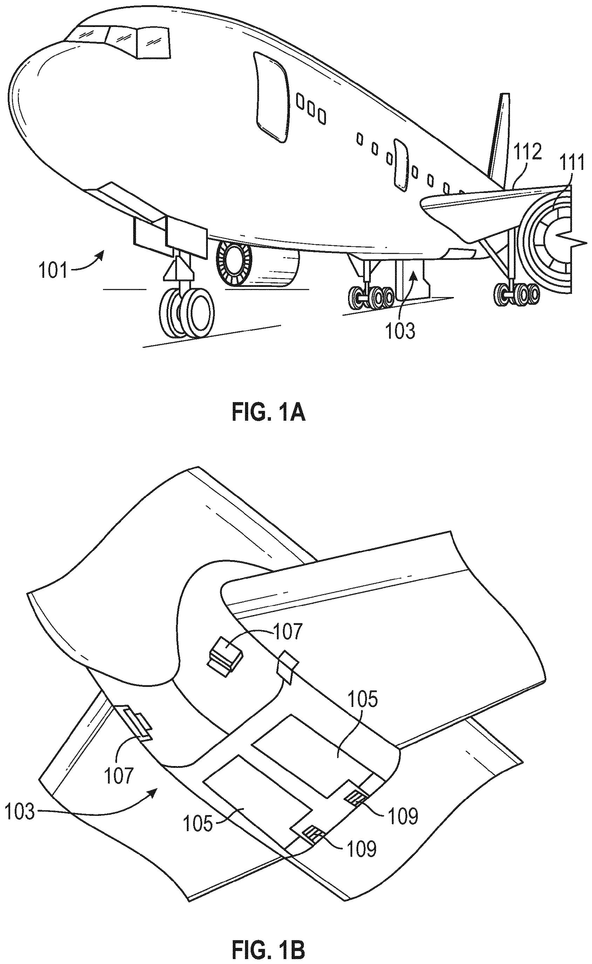

As shown in FIGS. 1A-1B, an aircraft includes an aircraft body 101, which can include one or more bays 103 beneath a center wing box. The bay 103 can contain and/or support one or more components of the aircraft 101. For example, in some configurations, the aircraft can include environmental control systems (ECS) and/or on-board inerting gas generation systems (OBIGGS) within the bay 103. As shown in FIG. 1B, the bay 103 includes bay doors 105 that enable installation and access to one or more components (e.g., OBIGGS, ECS, etc.). During operation of environmental control systems and/or fuel inerting systems of the aircraft, air that is external to the aircraft can flow into one or more ram air inlets 107. The outside air may then be directed to various system components (e.g., environmental conditioning system (ECS) heat exchangers) within the aircraft. Some air may be exhausted through one or more ram air exhaust outlets 109.

Also shown in FIG. 1A, the aircraft includes one or more engines 111. The engines 111 are typically mounted on the wings 112 of the aircraft and are connected to fuel tanks (not shown) in the wings, but may be located at other locations depending on the specific aircraft configuration. In some aircraft configurations, air can be bled from the engines 111 and supplied to OBIGGS, ECS, and/or other systems, as will be appreciated by those of skill in the art.

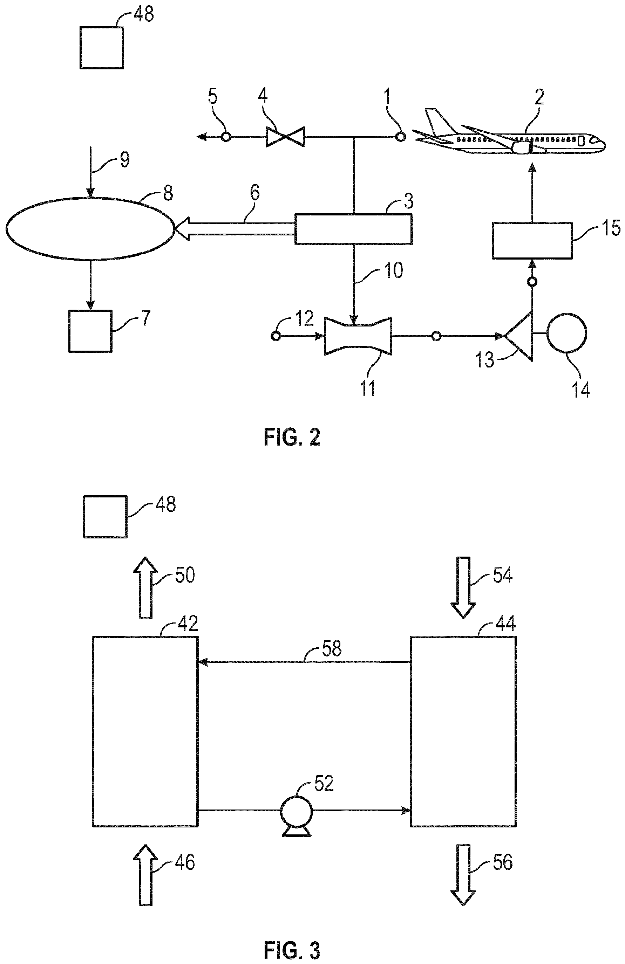

With reference now to FIG. 2, there is schematically shown an example system for providing inert gas to a protected space. As shown in FIG. 2, air from an air circulation return or exhaust 1 associated with an environmental control system of an aircraft 2 is directed to a carbon dioxide separator 3. The flow of air to the carbon dioxide separator 3 can be controlled by valve 4 in operative fluid communication with an exhaust 5. The carbon dioxide separator 3 removes carbon dioxide from the cabin air and directs it from a carbon dioxide outlet along an inert gas flow path 6 to a protected space 7 such as an aircraft fuel tank, cargo bay, avionics bay, or other protected space. In some aspects, the removed carbon dioxide can be combined with inert gas generated by an optional inert gas generator 8, such as an air separation module that generates nitrogen-enriched air (NEA) by passing fresh air 9 through a membrane such as a tubular polymer (e.g., polyimide) membrane or a zeolite membrane, or a catalytic combustion inert gas generator, or an electrochemical oxygen removal inert gas generator. In such combinations, CO₂ provided by the carbon dioxide separator 3 can provide a technical effect of reducing the amount inert gas that has to be produced by some other method, which can reduce the size and/or energy required to operate these other inert-gas generation devices. Additionally, the recirculation of air scrubbed of CO₂ air can reduce the amount of fresh air that has to be treated and pressurized to maintain the air quality in the cabin, as the CO₂ level in the cabin often dictates the required fresh air rate. Therefore, this can substantially reduce the energy required to maintain the desired cabin environment. Additional disclosure regarding inert gas generators that can be used as inert gas generator 8 can be found in US patent application publication nos. US 2018/0155049 A1 and US 2017/0014774 A1, and US patent application serial no. 16/375,639, the disclosures of all of which are incorporated herein by reference in their entirety.

In some aspects, the inert gas delivered to the protected space can have an oxygen content of less than 12% by volume. In some aspects, the air remaining after removal of carbon dioxide by the carbon dioxide separator 3 can be returned to the cabin and/or cockpit from an air outlet of the carbon dioxide separator. As shown in the example embodiment of FIG. 2, the return air scrubbed of carbon dioxide is directed along an air flow path 10 to an ejector 11, where it is mixed with fresh air 12 and directed to a compressor 13. The compressor 13 is shown as powered by a motor 14, but can also be powered by a mechanical power transfer coupling connected to a turbine (not shown). Air from the compressor 13 is then directed to an air supply flow path of an aircraft ECS 15, from which it is returned to the pressurized space of the aircraft 2. Additional disclosure regarding aircraft environmental control systems can be found in US Patent No. 10,160,546, the disclosure of which is incorporated herein by reference in its entirety.

The carbon dioxide separator can be any type of device or system for separation of carbon dioxide from air. Examples of such devices/systems include but are not limited to sorbent-based separators, including sorbents that remove CO₂ by absorption (e.g., forming a solution with CO₂) and sorbents that remove CO₂ by adsorption. Examples of CO₂ sorbents that can absorb CO₂ include but are not limited to amines (e.g., monoethanol amine, hindered amines, amine blends with other solvents), K₂CO₃, alkali or alkali earth bases (e.g., LiOH, CaOH₂), quinones. Examples of CO₂ sorbents that can adsorb CO₂ include but are not limited to CFCMS (carbon fiber composite molecular sieve), solid amine adsorbents (e.g., HSC, HSC+, HSG), metal organic framework sorbents, molecular sieves (e.g., zeolite, activated carbon). Other materials can act as a sorbent by reacting with carbon dioxide in a reversible chemical reaction (e.g., a metal oxide that forms a carbonate) that is released when the reaction is reversed. Separators based on sorbents can include a capture stage that absorbs or adsorbs the CO₂, and a release stage that releases CO₂ from the sorbent. In some aspects, the sorbent can be a fluid (e.g., a liquid sorbent, or a solid sorbent dissolved in or dispersed as particles in a carrier liquid (e.g., water) that flows in a loop between a capture stage where it contacts CO₂-containing air from the cabin or cockpit space, and a release stage where it contacts a gas stream to be directed to the protected space and regenerates the sorbent. Capture of CO₂ by the sorbent and release of CO₂ from the sorbent can be promoted by varying the temperature or pressure (higher temperatures and lower pressures typically favor release whereas lower temperatures and higher pressures typically favor capture, also referred to as pressure swing or temperature swing), or both pressure and temperature. Other variations such as chemical modifications to the sorbent, or application of an electric field can also be used. Additional disclosure regarding carbon dioxide separators and sorbents can be found in The CO2 economy: Review of CO2 capture and reuse technologies, E. Koytsoumpa et al., The Journal of Supercritical Fluids, 132, Feb. 2018, or Separation of CO2 From Flue Gas: A Review, D. Aaron and C. Tsouris, Separation Science and Technology, 40:1-3, 321-348, 2005, the disclosures of both of which are incorporated herein by reference in their entirety. CO₂ separators not based on sorbents can also be used, including but not limited to separators that refrigerate the CO₂-containing gas under pressure to condense the CO₂ or form CO₂-containing hydrates, or membrane separators.

An example embodiment of a CO₂ separator with a fluid sorbent is schematically shown in FIG. 3. As shown in FIG. 3, the separator includes a capture section 42 and a release section 44. The sections can be any type of fluid contactor, such as a bubbler. A CO₂-containing gas stream 46 from a cabin or cockpit space contacts the sorbent in the capture section 42 and emerges as a CO₂-scrubbed gas stream 50 that can be returned to the cabin or cockpit space. A pump 52 directs the fluid sorbent to the release section 44 where it can be contacted with a gas stream 54 (e.g., an outside air stream or an inert gas stream from an inert gas generator such as 8 (FIG. 2) under conditions such as increased temperature and/or reduced pressure to promote release of CO₂ into the gas stream, which is discharged as a CO₂-rich inert gas stream 56 that can be directed to a protected space such as an aircraft fuel tank. The removal of CO₂ from the sorbent in the release section 44 regenerates the sorbent, which is then directed through flow path 58 back to the capture section 42 for repetition of the sorption/desorption cycle.

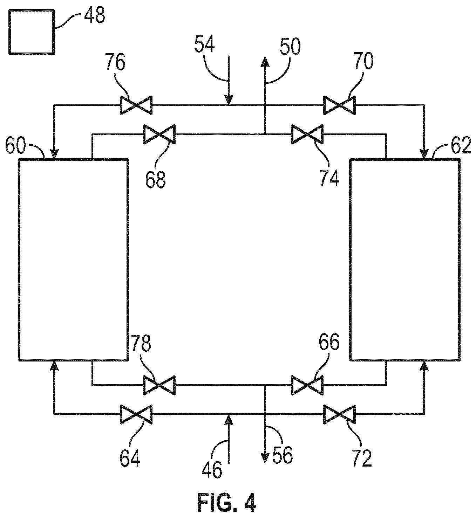

An example embodiment of a CO₂ separator with a stationary sorbent is schematically shown in FIG. 4. As shown in FIG. 4, the separator includes a fluid contactor 60 and a fluid contactor 62. The contactors can be any type, including but not limited to packed bed contactors, fluidized bed contactors, bubblers, etc. The fluid contactor 60 and the fluid contactor 62 are arranged with conduits and control valves such that one fluid contactor can be in a CO₂ capture mode while the other fluid contactor is in a CO₂ discharge mode, as described below. For example, in a first mode of operation, the fluid contactor 60 operates in a CO₂ capture mode and the fluid contactor 62 operates in a CO₂ discharge (i.e., sorbent regeneration) mode, with valves 64, 66, 68, and 70 open, and valves 72, 74, 76, and 78 closed. In this first mode of operation, the CO₂-containing gas stream 46 from a cabin or cockpit space flows through the open valve 64 to the fluid contactor 60 where it contacts the sorbent in the fluid contactor 60 and emerges as a CO₂-scrubbed gas stream 50 through the open valve 68 and can be returned to the cabin or cockpit space. The gas stream 54 (e.g., an outside air stream or an inert gas stream from an inert gas generator such as 8 (FIG. 2) flows through the open valve 70 to the fluid contactor 62 where it contacts the sorbent in the fluid contactor 62 under conditions such as increased temperature and/or reduced pressure to promote release of CO₂ into the gas stream, which is discharged as a CO₂-rich inert gas stream 56 through the open valve 66 and can be directed to a protected space such as an aircraft fuel tank. In a second mode of operation, the fluid contactor 62 operates in a CO₂ capture mode and the fluid contactor 60 operates in a CO₂ discharge (i.e., sorbent regeneration) mode, with valves 64, 66, 68, and 70 closed, and valves 72, 74, 76, and 78 open. In this second mode of operation, the CO₂-containing gas stream 46 from a cabin or cockpit space flows through the open valve 72 to the fluid contactor 62 where it contacts the sorbent in the fluid contactor 60 and emerges as a CO₂-scrubbed gas stream 50 through the open valve 74 and can be returned to the cabin or cockpit space. The gas stream 54 flows through the open valve 76 to the fluid contactor 60 where it contacts the sorbent in the fluid contactor 60 under conditions such as increased temperature and/or reduced pressure to promote release of CO₂ into the gas stream, which is discharged as a CO₂-rich inert gas stream 56 through the open valve 78 and can be directed to a protected space such as an aircraft fuel tank. By alternating between the first and second modes of operation, the separator can be operated in a continuous fashion. Of course, if continuous operation is not needed, a single fluid contactor can be used, alternating between CO₂ capture and CO₂ discharge modes.

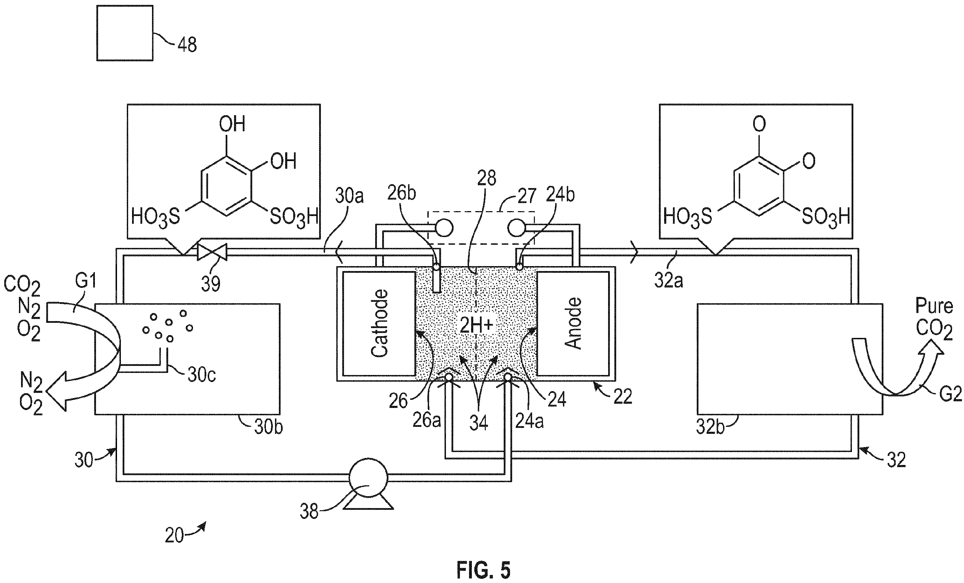

In some embodiments, the sorbent can be chemically or electrochemically altered between capture and discharge or release stages in order to change the affinity of the sorbent for carbon dioxide. In some aspects, an electrochemical CO₂ separator can be used, such as disclosed in US patent application publication no. US 2019/0030485 A1, the disclosure of which is incorporated herein by reference in its entirety. FIG. 5 schematically illustrates an example of an electrochemical separator 20 ("separator 20"). As will be described, the disclosed separator 20 can utilize an electrochemically active, stable quinone, without a need for dissolution in a supporting electrolyte. The separator 20 includes an electrochemical reactor 22 that has an anode 24 and a cathode 26. The anode 24 and cathode 26 are connected in an electrical flow path 27 with a power source, to provide input electrical power.

Although the arrangement of such reactors or cells may be varied, the anode 24 in this example includes an anode flow path inlet 24a and an anode flow path outlet 24a. The cathode 26 includes a cathode flow path inlet 26a and a cathode flow path outlet 26b. There is an ion exchange membrane 28 that separates the anode 24 and the cathode 26. For example, a proton exchange membrane 28 may be comprised of a perfluorinated sulfonic acid polymer or other ion-exchange material that is adapted to conduct protons and substantially block migration of larger molecules, as well as being non-conductive to electrons (i.e., is an electrical insulator). A single cell is shown, but the electrochemical reactor may consist of multiple cells, which may be arranged in a stack using interconnects and endplates as known to those skilled in the art. Similarly, the reactor 22 may comprise several stacks that can be electrically connected in series or in parallel by those skilled in the art.

The separator 20 includes a sorption flow path 30 and a desorption flow path 32. The sorption flow path 30 serves to collect, or absorb, carbon dioxide from a mixed gas stream, represented at G1, and the desorption flow path 32 serves to discharge carbon dioxide as an essentially pure stream, represented at G2, which may also contain water vapor. The sorption flow path 30 includes a line 30a that is fluidly connected with the cathode flow path outlet 26b and the anode flow path inlet 24a. The sorption flow path 30 includes a carbon dioxide absorber 30b, which will be explained further below. The desorption flow path 32 includes a line 32a that is fluidly connected the anode flow path outlet 24b and the cathode flow path inlet 26a. The desorption flow path 32 includes a carbon dioxide desorber 32b, which will also be described below.

The separator 20 also includes a working liquid 34 for circulation through the electrochemical reactor 22 via the sorption flow path 30 and desorption flow path 32. The working liquid 34 is closed in the system. That is, the working liquid is not consumed in the process or removed from the separator 20. A small portion of the working liquid 34 may be lost to evaporation over time, and can be readily replaced as needed. As will be appreciated, the absorber 30b and a desorber 32b in the illustrated example are external to the electrochemical reactor 22. Alternatively, the absorber 30b and desorber 32b can be combined into the electrochemical reactor 22, with the electrochemical reactor 22 configured for two-phase flow (e.g., the gas streams G1/G2 and the working liquid 34).

The working liquid 34 includes an electrochemically active agent (e.g., quinone), which can be dissolved in a carrier solvent such as water or an alcohol. A solvent is not needed in all instances, but some quinones may be solids at temperatures at which the system is operated, in which case, a solvent such as water or an alcohol can be used. Quinone alone has low solubility in water. In order to increase solubility, and thus the concentration of useable dissolved quinone in an aqueous working liquid 34, the quinone is functionalized with one or more ionic groups. An aqueous working liquid 34 is relatively non-volatile, non-flammable, and non-corrosive in comparison to other working fluids often used in electrolytic cells. For example, in some aspects an aqueous working liquid 34 can be free of strong acids, such as sulfuric acid, which often serve as electrolytes in other types of working fluids. In this regard, in some aspects, an aqueous working liquid 34 can include only water, the quinone, and impurities.

In some aspects, the separator 20 can include one or more pumps 38 and valves 39 to transport the working liquid 34 through the sorption flow path 30, electrochemical reactor 22, and desorption flow path 32.

The cathode 26 of the electrochemical reactor 22 is operable, with an input of electric power via the electrical flow path 27, to electrochemically reduce the quinone of the working liquid 34, to the corresponding hydroquinone thereby electrochemically activating the quinone for carbon dioxide capture in the carbon dioxide collector 30b. The anode 24 of the electrochemical reactor 22 is operable to electrochemically oxidize the hydroquinone of the working liquid 34, back to the corresponding quinone thereby electrochemically deactivating the quinone and releasing carbon dioxide as gas.

The electrochemical reactions in the electrochemical reactor 22 can be characterized by the equation: Quinone ("Q") + 2H⁺ + 2e⁻ → Hydroquinone ("QH₂") at the cathode, and QH₂ → Q + 2H⁺ + 2e⁻ at the anode. The electrons are driven by the power source through the external flow path 27, and the protons are transported though the membrane 28 to the anode.

The carbon dioxide absorber 30b is configured to expose the working liquid 34 to the mixed gas stream G1 that contains carbon dioxide. Although not limited, in this example the carbon dioxide absorber 30b includes a gas bubbler 30c that is operable to release bubbles of the mixed gas G1 into the working liquid 34. The working liquid 34 that is activated in the cathode 26 flows to the carbon dioxide absorber 30b. The activated quinone (i.e., the hydroquinone) has an affinity to bond with carbon dioxide to which it is exposed. The working liquid 34 with captured carbon dioxide then flows into the anode 24 of the electrochemical reactor 22, where the quinone is deactivated to release the captured carbon dioxide as gas. The carbon dioxide desorber 32b is configured to emit the carbon dioxide gas, as the pure stream G2. For instance, the carbon dioxide desorber 32b may include an open passage to siphon off the gaseous carbon dioxide or a membrane that is selectively permeable to carbon dioxide.

In further aspects, the quinone of the working liquid 34 is selected from benzoquinones, naphthoquinones, anthraquinones, or combinations thereof. For example, a benzoquinone can be 1,4 benzoquinone or 1,2 benzoquinone, but the latter may be more favorable for functionalization. The functionalization is chosen to both enhance the solubility of the quinone, as well as provide ionic conductivity when it is dissolved in water.

In other aspects, the functionalized quinone can include ionic groups, such as one or more sulfonic acid groups. Examples of functionalized quinones include but are not limited to 1,2 hydrobenzoquinone disulfonic acid or 2,7 anthraquinone disulfonic acid. The 1,2 benzoquinone disulfonic acid has a higher reduction-oxidation potential than anthraquinone (approximately 0.8V versus 0.2V, as determined against a reversible hydrogen electrode). Therefore, the 2,7 anthraquinone disulfonic acid is more susceptible to oxidation in the presence of free oxygen, whereas the 1,2 benzoquinone disulfonic acid does not readily form an oxide in the presence of oxygen. Thus, 1,2 benzoquinone disulfonic acid may provide a more stable, electrochemically active aqueous working liquid 34.

The ionic group, such as the sulfonic acid group, enhances solubility of the quinone in water. As an example, an aqueous working liquid 34 has a concentration of the functionalized quinone of 1 mol/L to 3 mol/L (moles per liter). In some aspects, the concentration may be greater than 1 mol/L, such as at least 2 mol/L or even 4 mol/L. An aqueous working liquid 34 thus has a high quinone concentration in comparison to the relatively low solubility of quinones dissolved in dilute acids (typically, 1 mol/L or less). The high concentration allows an aqueous working liquid 34 to adsorb more carbon dioxide per liter and it also enhances diffusion of the quinone in the electrochemical reactor 22, thus increasing reaction efficiency.

In addition to enhancing solubility in water, the sulfonic acid groups also serve as an ionic carrier, i.e., make the working liquid 34 an electrolyte. Thus, the quinone molecules have dual functionality as both the electroactive specie and as an ionic conductor. As a result of this functionalization of the quinone, a separate electrolyte, such as an acid, a base, or ionic liquid, need not be used.

The separator 20 may also represent a method for separating carbon dioxide. Such a method may include dissolving the electrochemically active agent of quinone in water to form an aqueous working liquid 34 by functionalizing the quinone with the one or more ionic groups. In the cathode 26 of the electrochemical reactor 22, the quinone of the working liquid 34 is electrochemically activated for sorption of carbon dioxide. The activated quinone is then exposed to the mixed gas stream G1 that contains carbon dioxide. The quinone captures a least a portion of the carbon dioxide. The quinone is then electrochemically deactivated in the anode 24, to release the captured carbon dioxide as the pure carbon dioxide gas stream G2. This pure, or water saturated carbon dioxide stream can be used for purposes in addition to providing an inert gas, such as the carbonation of water to make soda, as is well known by those skilled in the art.

In some aspects, the inert gas systems described herein can provide a technical effect of promoting generation inert gas with a reduced payload footprint (i.e., overall inert gas system weight) by capturing and utilizing an additional source inert gas in the form of carbon dioxide exhaled by passengers and crew.

As further shown in FIGS. 2-5, the system can include a controller 48. The controller 48 can be in operative communication with system components such as the carbon dioxide separator 3, valves 4, 39, pump 38, the inert gas generator 8, the protected space (e.g., fuel tank) 7, and any associated valves, pumps, compressors, conduits, pressure regulators, or other fluid flow components, and with switches, sensors, and other electrical system components, and any other system components to operate the inert gas system. These control connections can be through wired electrical signal connections (not shown) or through wireless connections. The controller can be an independent controller dedicated to controlling the inert gas system, or can interact with other onboard system controllers or with a master controller. In some aspects, data provided by or to the controller 48 can come directly from a master controller. It is also noted that the above-described embodiments are exemplary in nature and that variations can be made thereon within the scope of this disclosure. For example, FIGS. 2-5 show singular CO₂ separators, but they can also be deployed in banks or bundles of multiple CO₂ separators.

The term "about" is intended to include the degree of error associated with measurement of the particular quantity based upon the equipment available at the time of filing the application.

The terminology used herein is for the purpose of describing particular aspects only and is not intended to be limiting of the present disclosure. As used herein, the singular forms "a", "an", "the", or "any" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or aspects, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all aspects falling within the scope of the claims.

## Claims

1. A system for providing inert gas to a protected space (7), onboard an aircraft that includes a pressurized cabin or cockpit space, comprising:
an airflow path including an inlet and an outlet, wherein the inlet is in operative fluid communication with the pressurized cabin or cockpit space;
a carbon dioxide separator (3) configured for separating carbon dioxide from air, including an inlet in operative fluid communication with the airflow path outlet, and a carbon dioxide outlet; and
an inert gas flow path (6) from the carbon dioxide outlet to the protected space.

2. The system of claim 1, wherein the carbon dioxide separator includes a sorbent for carbon dioxide arranged to remove carbon dioxide from the airflow path and to transfer carbon dioxide to the inert gas flow path.

3. The system of claim 2, wherein the sorbent removes carbon dioxide from the airflow path by absorption, or wherein the sorbent removes carbon dioxide from the airflow path by adsorption.

4. The system of claim 2, wherein the carbon dioxide separator includes:
a first fluid contactor in operative fluid communication with the airflow path;
a second fluid contactor in operative fluid communication with the inert gas flow path; and
a fluid flow path arranged to transport a fluid comprising the sorbent in a loop from the first fluid contactor to the second fluid contactor, and from the second fluid contactor to the first fluid contactor.

5. The system of claim 2, wherein the carbon dioxide separator includes:
a first fluid contactor including the sorbent therein; and
a gas flow path arranged to alternately: (a) to transport air from the airflow path to the first fluid contactor in a carbon dioxide capture mode, and (b) to transport carbon dioxide from the rom the first fluid contactor to the inert gas flow path, optionally wherein the carbon dioxide separator further includes a second fluid contactor including the sorbent therein, wherein the gas flow path is further arranged to alternately: (a) transport carbon dioxide from the from the second fluid contactor to the inert gas flow path when the first fluid contactor is in the carbon dioxide capture mode, and (b) to transport air from the airflow path to the second fluid contactor when the first fluid contactor is not in the carbon dioxide capture mode.

6. The system of claim 2, wherein the sorbent comprises an amine, an alkaline or alkaline earth, a quinone, a molecular sieve, or a metal organic framework sorbent.

7. The system of any preceding claim, wherein the carbon dioxide separator comprises:
an electrochemical cell comprising an anode and a cathode separated by a separator comprising an ion transfer medium, an anode fluid flow path in operative fluid communication with the anode between an anode fluid flow path inlet and an anode fluid flow path outlet, and a cathode fluid flow path in operative fluid communication with the cathode between a cathode flow path inlet and a cathode fluid flow path outlet;
a sorption fluid flow path from the cathode fluid flow path outlet to the anode fluid flow path inlet, said sorption fluid flow path including an absorber in operative fluid communication with the airflow path inlet;
a desorption fluid flow path from the anode fluid flow path outlet to the cathode fluid flow path inlet, said desorption fluid flow path including a desorber in operative fluid communication with the carbon dioxide outlet; and
a working liquid in the sorption and desorption fluid flow loops comprising an electrochemically active agent that reversibly transforms from a first compound to a second compound at the anode, and from the second compound to the first compound at the cathode, wherein the first compound has a greater sorption capacity for carbon dioxide relative to a carbon dioxide sorption capacity of the second compound.

8. The system of claim 7, wherein the electrochemically active agent comprises a quinone selected from the benzoquinone, naphthoquinone, anthraquinone, or a combination comprising any of the foregoing, optionally wherein the electrochemically active agent includes a sulfonic acid group.

9. The system of claim 7, wherein the electrochemically active agent comprises benzoquinone disulfonic acid, and/or wherein the working liquid comprises the electrochemically active agent dissolved in a carrier liquid.

10. The system of any preceding claim, further comprising an inert gas generator on the inert gas flow path.

11. An aircraft, comprising an aircraft body, a protected space including a fuel tank, an engine, a pressurized cabin or cockpit space, and the system of any preceding claim.

12. A method of inerting an aircraft protected space (7), comprising:
removing carbon dioxide in air from a pressurized cabin or cockpit space; and
directing the removed carbon dioxide to the protected space (7).

13. The method of claim 12, further comprising generating inert gas in addition to the removed carbon dioxide, and directing the inert gas and the carbon dioxide to the protected space.

14. The method of claim 12 or 13, further comprising:
contacting the air from the pressurized cabin or cockpit space with a carbon dioxide sorbent to form a loaded sorbent; and
removing carbon dioxide from the loaded sorbent to form de-loaded sorbent, and directing the removed carbon dioxide to the protected space.

15. The method of any of claims 12 to 14, further comprising contacting the de-loaded sorbent with the air from the pressurized cabin or cockpit space to form loaded sorbent, and repeating said removing and contacting to recycle the sorbent, and/or further comprising electrochemically transforming an electrochemically active agent in the loaded sorbent from a first compound having a first sorption capacity for carbon dioxide to second compound having a second sorption capacity for carbon dioxide that is less than the first sorption capacity, thereby releasing carbon dioxide.
